# EUROPEAN PATENT SPECIFICATION

(11) **EP 2 299 370 B1**
(45) Date of publication and mention of the grant of the patent: **28.03.2012**
(21) Application number: 09170646.5
(22) Date of filing: 18.09.2009
(51) Int. Cl.: G06F 17/30, G01S 5/00, G01C 21/36

(54) **Expediting Reverse Geocoding with a Bounding Region**
Beschleunigende Geocodierung mit einer Grenzregion
Accélération du géocodage inversé avec une région de délimitation

(43) Date of publication of application: 23.03.2011
(73) Proprietor: RESEARCH IN MOTION LIMITED, Waterloo, Ontario N2L 3W8 (CA)
(72) Inventor: Ngo, Ngoc Bich, Kanata Ontario K2K 2A5 (CA); Owen , Russell Norman, Waterloo Ontario N2L 5Z5 (CA)
(74) Representative: Patel, Binesh

(56) References cited:
- US-A1- 2006 080 032
- US-A1- 2007 233 817
- US-B1- 6 604 046

## Description

### TECHNICAL FIELD

The present technology relates to location-aware wireless communications devices and, in particular, to techniques to enable these devices to efficiently interact with a reverse geocoder.

### BACKGROUND

Wireless communications devices (smart phones, cell phones, PDAs, or other such mobile devices) are becoming ubiquitous. These devices offer a panoply of features such as voice communications, e-mail, text messaging, Web browsing, calendaring, etc. Wireless communications devices equipped with Global Positioning System (GPS) receivers or other position-determining subsystems make the devices "location-aware" and thus enable a range of additional features, including navigation, location-based services, geo-tagging, and automatic location-based configuration of the device such as, for example, an automatic time-zone setting on the device. Some examples of location-based services are local weather, local news, local events, local shopping deals, identifying contacts or buddies in the immediate vicinity, providing traffic reports, alerts, etc. Location-based services can be used to locate the closest gas station, ATM, restaurant, hotel, or any other commercial or government establishment.

All of these services and features exploit knowledge of the device's current location. Many of these services such as location-based services (LBS), geotagging and automatic device configuration depend on reverse geocoding of geographical coordinates representing a current location of the device. Reverse geocoding is essentially a reverse lookup in a geographic information database that stores geographical information. Upon receipt of geographical coordinates, the reverse-geocoder determines what geographical features or entities are located at or near the coordinates. The reverse geocoder thus responds with a location description of what is at, or proximal to, the provided coordinates. Depending on the requested resolution and the filters applied, the results from the reverse-geocoder can be any sort of textual description for a location, such as, for example, a street address, city name, postal code, state/province, country, time zone, etc. At higher ("street-level") resolution, and again depending on the filtering, the reverse geocoder may return landmarks, hotels, gas stations, banks, restaurants, etc. Various GIS (geographical information service) and LBS (location-based service) databases can provide virtually any type of information - local weather, the presence of buddies/contacts, special events, alerts, etc. Another example of reverse geocoding is geo-tagging photos, videos, blogs, or other data. Reverse geocoding enables the device to determine a meaningful textual description of the location (e.g. a place name) in order to enable the device to geo-tag the data (e.g. digital photo file) with the name or description of the location where the data was created.

The request and response to and from a reverse geocoding server (reverse-geocoder) can take a few seconds, depending on network latency and the server throughput. This request-response lag negatively impacts the overall user experience and renders impractical or undesirable many otherwise useful applications that could be provided by reverse geocoding the location coordinates of the device. Not only does the conventional approach to reverse geocoding result in poor responsiveness for the application on the device but the frequent server calls have the deleterious effect of burdening both device and network resources. This has remained a technical problem for which there was, until now, no adequate solution.

US 2007/0233817 A1 discloses a system and method for distributing map content from a server to a communication device by transmitting a request from the communication device to the map server for a maplet index of map data covering a specified area and identified by coordinates for defining the map data, receiving the request at the map server and in response transmitting the maplet index to the communication device, wherein the maplet index defines content available the maplet without including all of the data points therein.

US 2006/0080032 A1 discloses a system and method of managing map data on electronic devices ach as portable electronic devices which includes a system and method of preloading map data, managing map data storage, sharing point of interest or pushpin data with other electronic devices, and displaying map data.

US 6,604,046 B1 discloses servers, systems, and related methods for rapidly delivering map data to many types of client, ranging from mobile telephones and personal digital assistants to workstations. To support multi-modal operations with at least two clients, the system includes a map server having two or more client-mode software modules or programs that govern how the server interacts with the clients. The first client, using an appropriate network address, links to the first program and receives a copy of several mapping objects, enabling the first client to provide certain map functions independent of the server. The second client links to the server using a different network address and receives proxy mapping objects, instead of the actual mapping objects, enabling the second client to work with the server to provide the map functions. The system also implements client-side and server-side caching of map data, and expandable map service pools, all promoting rapid delivery of map data and services.

### BRIEF DESCRIPTION OF THE DRAWINGS

Further features and advantages of the present technology will become apparent from the following detailed description, taken in combination with the appended drawings, in which:

FIG. 1 is a schematic depiction of one example of a wireless communications device on which the present technology can be implemented;

FIG. 2 is a schematic depiction of a wireless network in which an exemplary wireless communications device communicates location information to a reverse decoder in order to receive a complete bounding box of LBS data;

FIG. 3 is a flowchart outlining some of the main steps of a method of providing a location-based service (LBS) on a wireless communications device;

FIG. 4 depicts an example of a geographical area with which various classes of LBS data is associated;

FIG. 5 depicts, by way of example, how one country of the geographical area is enclosed by a bounding box; and

FIG. 6 depicts, by way of example, an isolated bounding box having LBS data that is downloaded and cached on the wireless communications device;

FIG. 7 depicts how the device may travel throughout the region defined by the bounding box without requiring new LBS data to be obtained;

FIG. 8 depicts a scenario in which the device exits the bounding box, thus necessitating the requesting of new LBS data;

FIG. 9 depicts, by way of example, the caching of local weather information, local recreation information and local landmark information as LBS data for the bounding box;

FIG. 10 depicts, by way of example, local weather information that can stored in and fetched from the LBS data cached on the device;

FIG. 11 depicts, by way of example, local recreation information that can be stored in and fetched from the LBS data cached on the device;

FIG. 12 depicts, by way of example, how geotagging can be efficiently performed by caching local landmark information on the device;

FIG. 13 depicts a bounding box being defined with city limits of a fictitious city;

FIG. 14 depicts, by way of example, local shopping information that can be stored in and fetched from an LBS data cache for an LBS city-level shopping application;

FIG. 15 is a schematic depiction of an example of an LBS services screen on a wireless communications device that displays local information that is stored and fetched from the LBS data cached on the device;

FIG. 16A is a schematic depiction of a composite bounding region composed of multiple bounding boxes; and

FIG. 16B is a schematic depiction of a composite bounding region composed of multiple hexagonal bounding regions.

It will be noted that throughout the appended drawings, like features are identified by like reference numerals.

### DETAILED DESCRIPTION

In general, the present technology improves the responsiveness of an application, executing on a wireless communications device, that utilizes reverse geocoding to provide location descriptions. In some implementations, this is accomplished by caching or storing location description data obtained from the reverse geocoder for not only the location of interest but also for a bounding region that geographically surrounds the location of interest. As long as a subsequent request for location description data is for a location lying within the bounding region, the device can fetch the requested location description data from the cache or local data store. In some implementations, only if the location lies outside the bounding region does the device communicate a new request to the reverse geocoding server.

This technology may be used in conjunction with location-based services (LBS), geo-tagging, automatic location-dependent device configurations and settings, or any other application, service or feature that requires interaction with a reverse geocoder.

This novel technique not only improves the responsiveness of the application requesting the location description but also has the effect of diminishing the burden on both device and network resources. In contrast, the conventional technique inefficiently makes a request to the reverse geocoding server every time that the application requests an updated location description, which expends both device and network resources and introduces an unwanted lag in response time. The overall user experience is thus improved using this novel technology.

In particular implementations of this technology, the device may persistently store the location description data for each bounding region to thereby create a library of bounding regions on the device that can be retrieved far more expeditiously than having to make a request to the reverse geocoding server.

In other implementations, the size of the bounding region is determined by the administrative region specified by the application or, alternatively, by the resolution specified by the application. The bounding region is thus defined to enclose the location of interest while fitting inside the boundaries of the predetermined geographical entity e.g. within a city, province, country, etc.). In other words, the administrative region or, alternatively, level of granularity specified by the application determines which one of a plurality of predetermined geographical entities to employ, e.g. whether to use a city, province, country, etc. The reverse geocoder then defines the bounding region such that the bounding region includes the location coordinates but also fits within the boundaries of whichever geographical entity is selected (city, province, country, etc.). Once the location description data for that bounding region is downloaded and cached on the device, it can be fetched rapidly from the cache by the application provided that the location coordinates remain within the bounding region.

Thus, a main aspect of the present technology is a method for reverse geocoding location information obtained by a wireless communications device. The method entails determining the location information for a location, communicating the location information to a reverse geocoding server that reverse-geocodes the location information to generate location description data for a bounding region that geographically surrounds the location, receiving the location description data from the reverse geocoding server for the bounding region containing the location, and storing the location description data for the bounding region in a memory on the device.

Another main aspect of the present technology is a computer readable medium comprising code which when loaded into memory and executed on a processor of a wireless communications device is adapted to determine the location information for a location, communicate the location information to a reverse geocoding server that reverse-geocodes the location information to generate location description data for a bounding region that geographically surrounds the location, receive the location description data from the reverse geocoding server for the bounding region containing the location, and cache the location description data for the bounding region in a memory cache on the device.

Yet another main aspect of the present technology is a wireless communications device having a processor operatively coupled to a memory for executing an application on the device, the application requesting a location description for a location. The device includes a radiofrequency transceiver for communicating location information obtained by the device for the location to a reverse geocoding server to enable reverse-geocoding of the location information to generate location description data for a bounding region that geographically surrounds the location. The transceiver is configured to receive the location description data and to provide the location description data to the memory for caching of the location description data on the device.

The details and particulars of these aspects of the technology will now be described below, by way of example, with reference to the attached drawings.

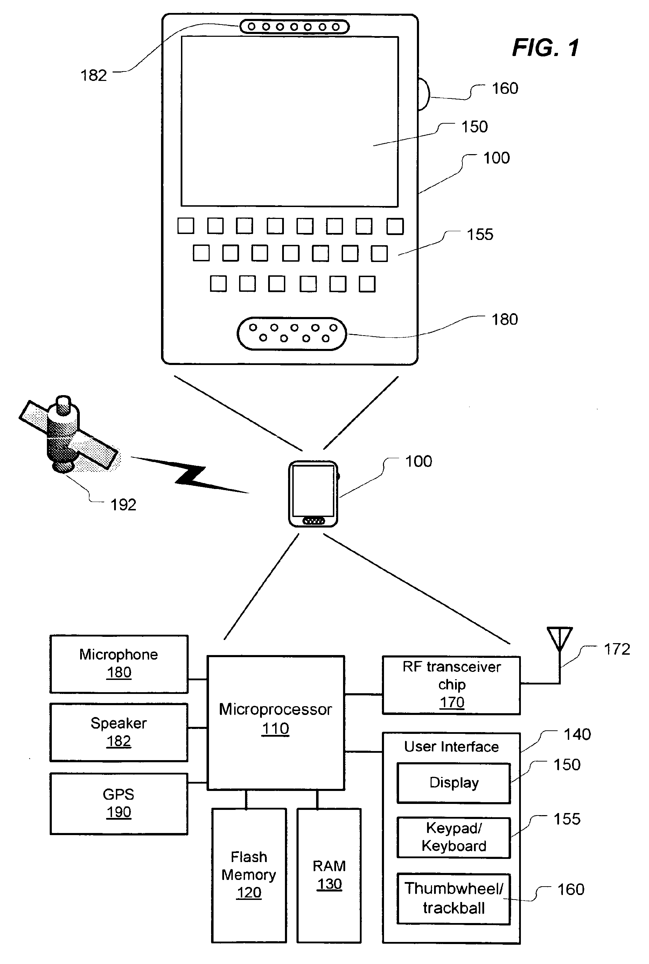

FIG. 1 is a schematic depiction of a wireless communications device 100 on which the present technology can be implemented. The term "wireless communications device" is meant to encompass a broad range of cellular and mobile devices such as, for example, smartphones, cell phones, satellite phones, wireless-enabled personal digital assistants (PDAs), or wireless-enabled computing tablets, laptops, notebooks, palm-tops, etc.

As shown schematically in FIG. 1, the wireless communications device 100 includes a microprocessor (referred to herein as a "processor") 110 operatively coupled to memory (Flash Memory 120 and/or RAM 130). The device 100 has a user interface 140 which includes a display (e.g. an LCD screen) 150, a keyboard/keypad 155. A thumbwheel/trackball 160 may optionally be provided as part of the user interface. Alternatively, the user interface 140 may include a touch screen in lieu of a keyboard/keypad. The wireless communications device 100 includes a radiofrequency (RF) transceiver chipset 170 for wirelessly transmitting and receiving data and voice communications, e.g. via a cellular network. The wireless communications may be performed using CDMA, GSM, or any other suitable communications standard or protocol. A microphone 180 and speaker 182 are provided for voice communications.

As further depicted in FIG. 1, the wireless communications device 100 includes a GPS chipset 190 (or other position-determining subsystem) to determine the current location of the device from radiofrequency signals emitted by a plurality of orbiting GPS satellites.

Although the present disclosure refers to expressly to the "Global Positioning System", it should be understood that this term and its abbreviation "GPS" are being used expansively to include any satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another type of position-determining subsystem may be used as well, e.g. a radiolocation subsystem that determines its current location using radiolocation techniques, as will be elaborated below. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. Radiolocation techniques may also be used in conjunction with GPS in a hybrid positioning system.

References herein to "GPS" are meant to include Assisted GPS and Aided GPS.

Other location-determining subsystems may also be used to provide more granular location data. In some embodiments, it may be sufficient to determine in what country the device is operating. In other embodiments, greater precision may be necessary. These other location-determining subsystem may involve, for example, techniques based on the identity of the closest base station tower or techniques involving obtaining information stored in a home location register (HLR) or visitor location register (VLR).

Accordingly, the present technology can be implemented on the wireless communications device 100 described above and illustrated in FIG. 1. The processor and the memory cooperate to execute an application on the device that requires interaction with a reverse geocoder. The application may be a location-based services application such as, for example, a local weather service, a local events service, a traffic alert, a local shopping service, etc. The application may be a geo-tagging application to enable geo-tagging of digital photos, videos, blogs, or other data with geographically meaningful labels or textual descriptions. Alternatively, the application may provide automatic configuration or settings for the device such as, for example, automatic time-zone settings. These examples are mentioned solely to illustrate the broad applicability of this technology.

The radiofrequency (RF) transceiver 170 of the wireless communications device 100 is configured for communicating location information determined at the device to a reverse geocoding server to enable reverse geocoding of the location information in order to generate location description data for the location and an entire bounding region (bounding box, bounding polygon or other shape) that geographically surrounds the location. In most implementations, the location information will be the location coordinates of latitude and longitude. These coordinates may be determined using GPS or other means. In most implementations, the location description data is the data representing the textual description of the place at, or most proximal to, the location coordinates. For example, the location description may be a city, province, country, landmark, street address, etc.

The RF transceiver 170 is also configured to receive the location description data and to provide this data to the memory for caching on the device. The (optional) GPS chipset or other position-determining subsystem may be provided to determine the current location of the device, i.e. to generate GPS position coordinates of latitude and longitude. When the device moves around within the bounding region (e.g. bounding box), all location description data is drawn (fetched) from the local cache. Only when the device exits the bounding region must the device fetch new location description data by making a new server call. This novel technology not only improves the responsiveness of the application but also reduces the burden on the device and network.

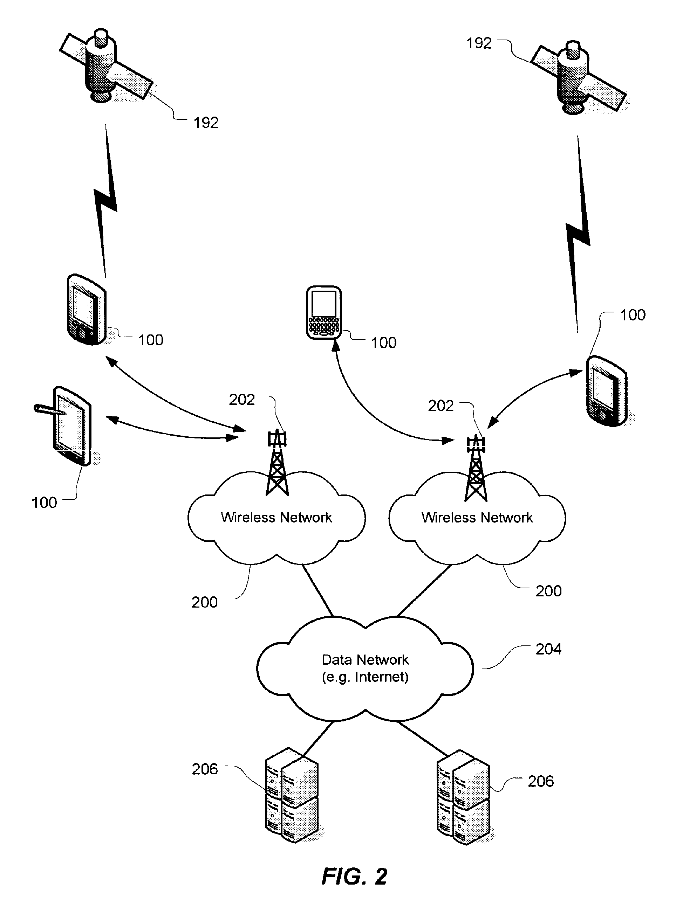

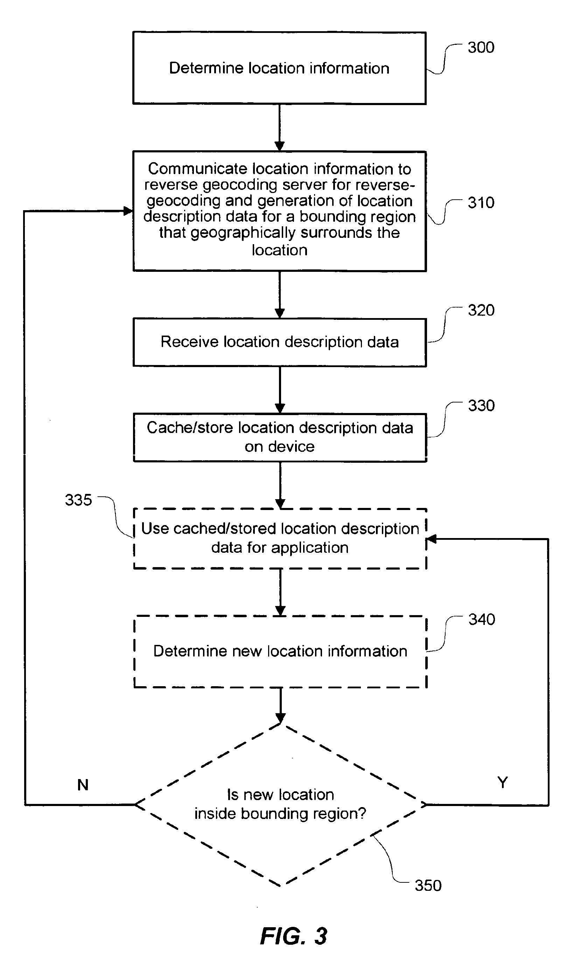

FIG. 2 schematically depicts, by way of example, how a plurality of wireless communications devices 100 interact with one or more reverse geocoding servers (reverse geocoders) 206. As shown, the wireless communications devices 100 communicate with the reverse geocoding servers 206 via wireless networks 200 and the Internet 204. In specific implementations that are discussed below in greater detail, the wireless communications devices 100 can communicate requests for reverse geocoding to one or more of these servers 206, which may operate independently, in tandem with other servers or as server clusters. As will elaborated below, when an application executing on the device requests location description data, the device communicates location information (e.g. GPS coordinates of latitude and longitude) to the reverse geocoding server (reverse geocoder) 206. The location description data is then returned to the device 100. As mentioned above, the conventional approach to obtaining such data was highly inefficient since frequent server calls were made every time updated data was required. This meant not only poor application responsiveness, but also a burden on device and network resources. In contrast, the present technology dramatically improves application responsiveness and reduces the burden on device and network resources by caching an entire set of location description data on the device for an entire geographical region defined by a bounding box, bounding polygon or other bounding region. As long as the device's location remains within the bounding box, the device can expeditiously fetch this data from its onboard cache. Only when the device travels beyond the geographical confines of the bounding box does the device make a new server call for updated data. This general method is explained below with regard to FIG. 3.

FIG. 3 is a flowchart outlining some of the main steps of a novel method of reverse geocoding location information obtained by a wireless communications device. The method comprises a step 300 of determining location information for a location. For example, this may entail obtaining a GPS position fix. The GPS position fix provides coordinates of latitude and longitude. These coordinates are one example of "location information". Other positioning techniques (other than GPS) may be used. For example, base station ID enables identification of the city in which the device is located, which for coarse-granularity applications is sufficient. As will be appreciated, in most instances, the location is the current location of the device, as determined by GPS or any other position-determining subsystem. However, it should be appreciated that in certain instances, it be desirable to enable manual input of another (arbitrarily selected) location that is not necessarily the current location, i.e. the location may instead be a user-specified location (a location of interest, a destination, etc. that is input by the user).

Referring to FIG. 3, once location information is determined, the method further involves (at step 310) communicating the location information to a reverse geocoding server that reverse-geocodes the location information to generate location description data for a bounding region that geographically surrounds the location. The bounding region may be selected to enclose the location in question and to fit within the boundaries of a predefined geographical area or zone, i.e. to fit inside the predefined boundaries or limits of one or a plurality of predetermined geographical entities (e.g. a city, state/province, country, postal code area, etc.). For example, a weather service might require province-level resolution whereas local shopping service might specify city-level resolution. Also by way of example, a local recreational information service might require national level resolution. In any event, the bounding region (e.g. bounding box) is made as large as possible without extending beyond the predefined borders or boundaries of the predetermined geographical entity (e.g. without extending beyond national or provincial borders or city limits). Alternatively, the bounding region may be defined using any arbitrarily sized and shaped zone surrounding the location in question (e.g. a 10, 20, 50, 100, 1000 square-kilometre zone, a 10 km x 20 km zone, a 20 km x 50 km zone, etc.). Some examples of bounding regions are presented below to clarify these concepts.

Still referring to FIG. 3, once the location description data is generated at the server, the data for the entire bounding region is subsequently received (step 320) from the reverse geocoding server (or via any intermediary or broker) for the bounding region. At step 330, the data for the bounding region is cached and/or stored on the device in a memory cache and/or device memory (hereinafter simply the "cache" or "store"). A volatile memory such as, for example, RAM (e.g. DRAM, SRAM) may be used to cache the data on the device. The data can then be used for the application (step 335). This method can be used in conjunction with any type of application that requires interaction with a reverse geocoder, e.g. LBS or geotagging applications for identifying nearby landmarks, hotels, gas stations, banks, restaurants, etc, local weather, local news, local events, alerts, etc., or an application that automatically adjusts device configurations or settings, e.g. an automatic time-zone setting.

Thereafter, the method may further involve determining new location information for a new location (at step 340). For example, the application may request an update in location description data at predetermined time intervals or, alternatively, the device may be configured to send a request for new data when the device has moved beyond a certain predetermined distance threshold. Whatever the trigger, instead of automatically making a server call to get updated location description data, the device determines (at step 350) whether the new location lies inside or outside the bounding region (e.g. bounding box). Where the new location lies inside the bounding region, the location description data for the new location is obtained from the cache on the device. Alternatively, where the new location lies outside the bounding region, the new location information is communicated to the reverse geocoding server to enable that new location information to be reverse geocoded, i.e. a new server call is made to obtain a new bounding box.

In one implementation of this technology, the location description data for each bounding region is furthermore stored in a persistent storage on the device to thereby create a (lasting) library of bounding regions that can be quickly retrieved whenever the device is located in one of those bounding regions. For example, if the user of the device travels frequently between two cities, the bounding regions for those cities may be stored persistently on the device so that these can be recalled expeditiously when the device is located in one of those two cities. In other words, the data for one or more bounding regions may be stored permanently in a non-volatile memory (persistent storage) such as, for example, ROM, PROM, EPROM, EEPROM, Flash memory.

The foregoing method steps can be implemented as coded instructions in a machine-readable medium, computer-readable medium or as a computer program product. In other words, the computer program product, machine-readable medium or computer readable medium stores software code that is programmed to perform the foregoing steps when loaded into memory and executed on the microprocessor of the wireless communications device.

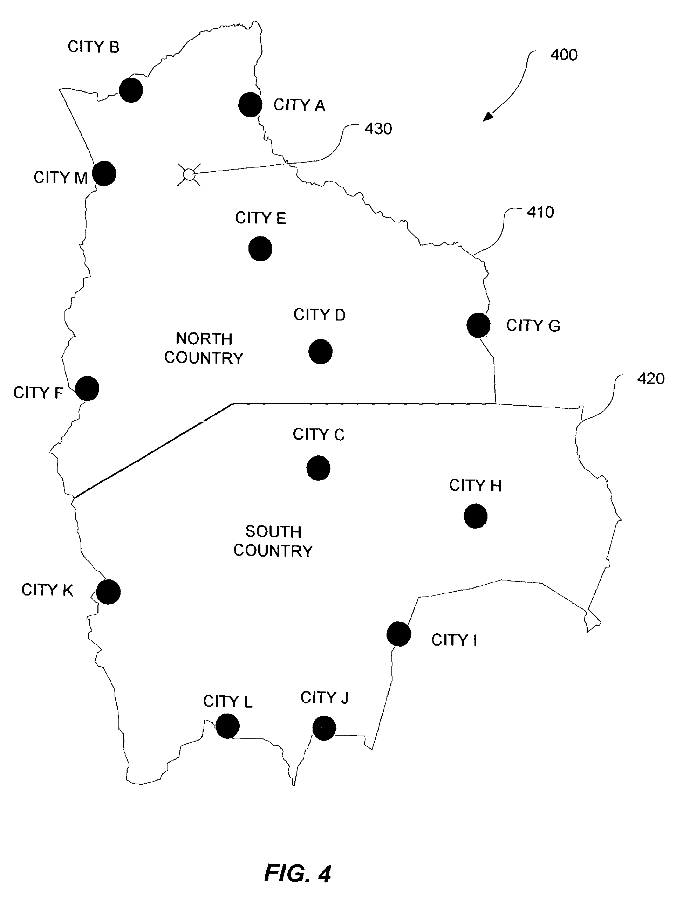

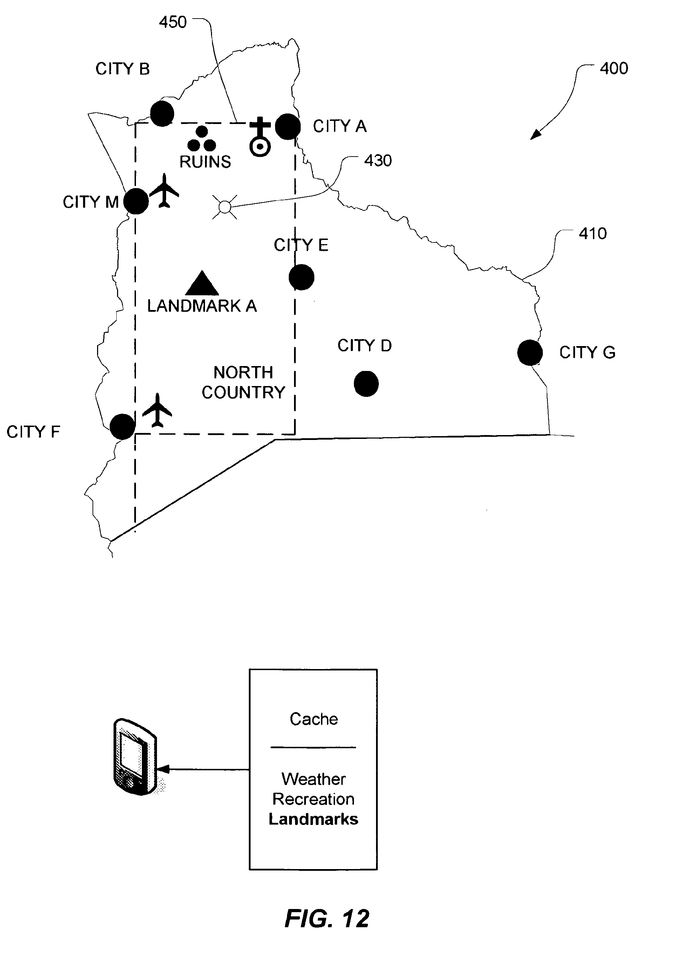

FIGS. 4-14 depict a set of examples of how the present technology is implemented to cache a bounding region of location description data. As shown by way of example in FIG. 4, a geographical area 400 consists of a North Country 410 and a South Country 420. The device has a current location 430 in the North Country. In this example, an application on the device wishes to obtain a location description for the current location 430 of the user. Accordingly, the device sends a request to a reverse geocoder to obtain this location description. In this example, the request specifies the administrative region that is sought or, alternatively, specify the level of granularity that is sought by the application.

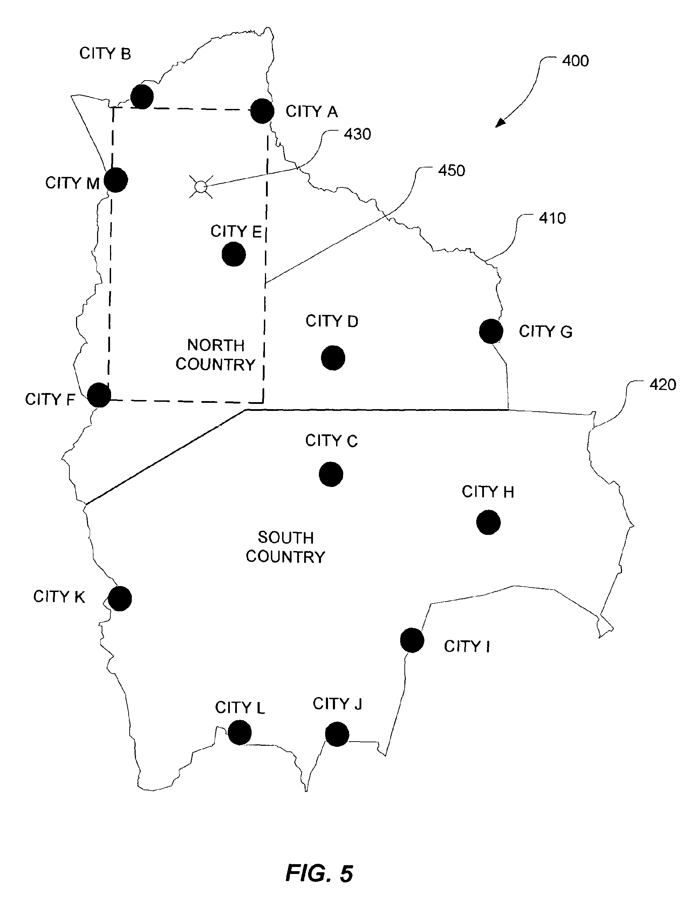

Based on the current location and the administrative region or level of granularity (resolution) specified by the application, the reverse geocoder determines (defines) a bounding region. In this example, it is assumed that the application requires a country-type administrative region. FIG. 5 shows a bounding region 450 enclosing the current location but which fits within the boundaries of the North Country. In this example, the bounding region is a bounding box. (A rectangular bounding box is one particularly efficient implementation of the bounding region, although other shapes may be used.) This bounding box is made as large as possible without extending beyond the boundaries of the country in which the device is currently located. As such, the bounding box 450 includes not only data for the current location 430 but also "extra" data for the surrounding area. Each bounding box is an approximation of the irregular map area with which it corresponds. In most implementation, the bounding box is determined (defined) by the server.

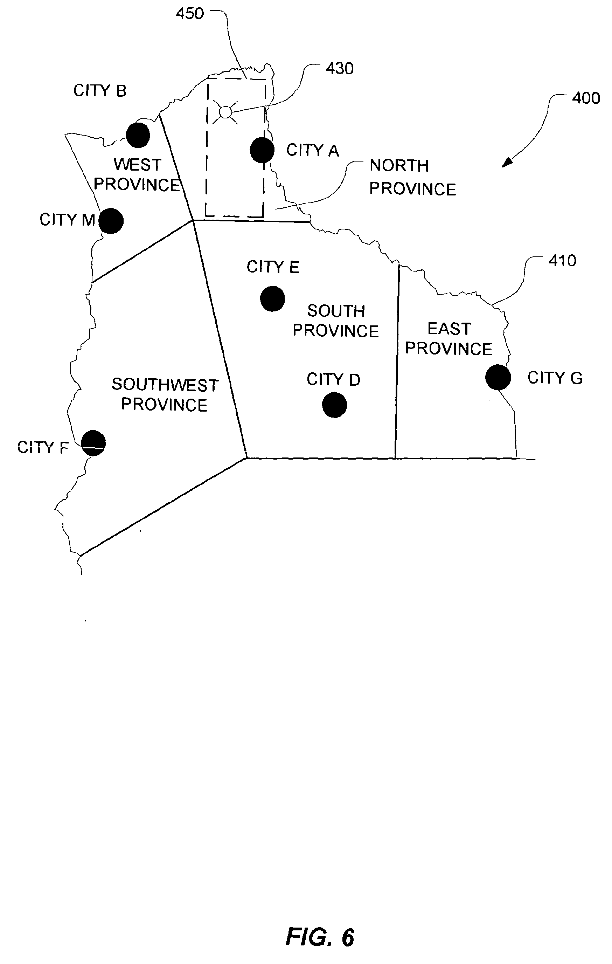

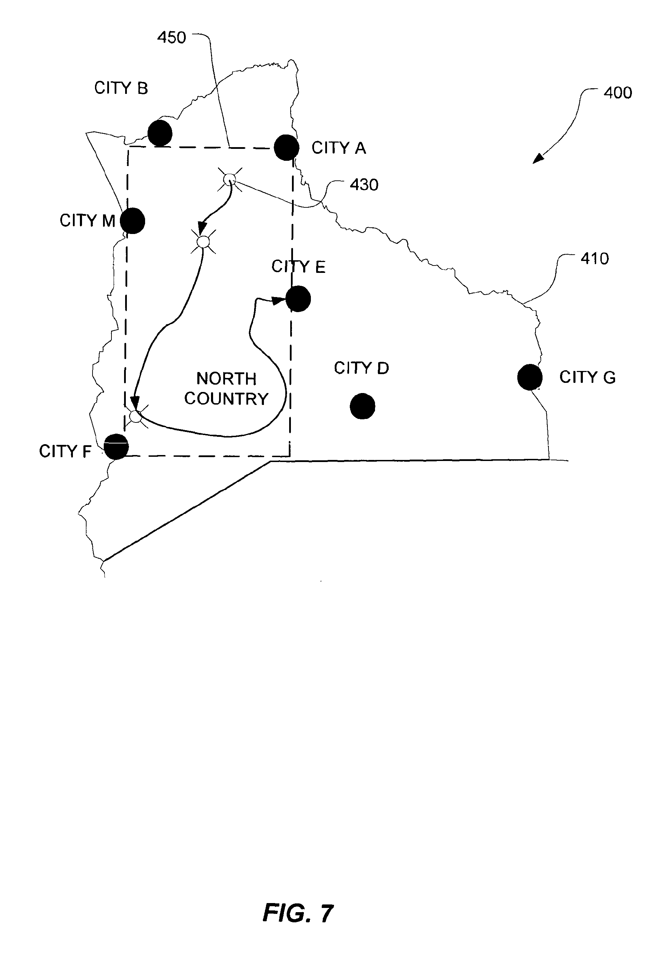

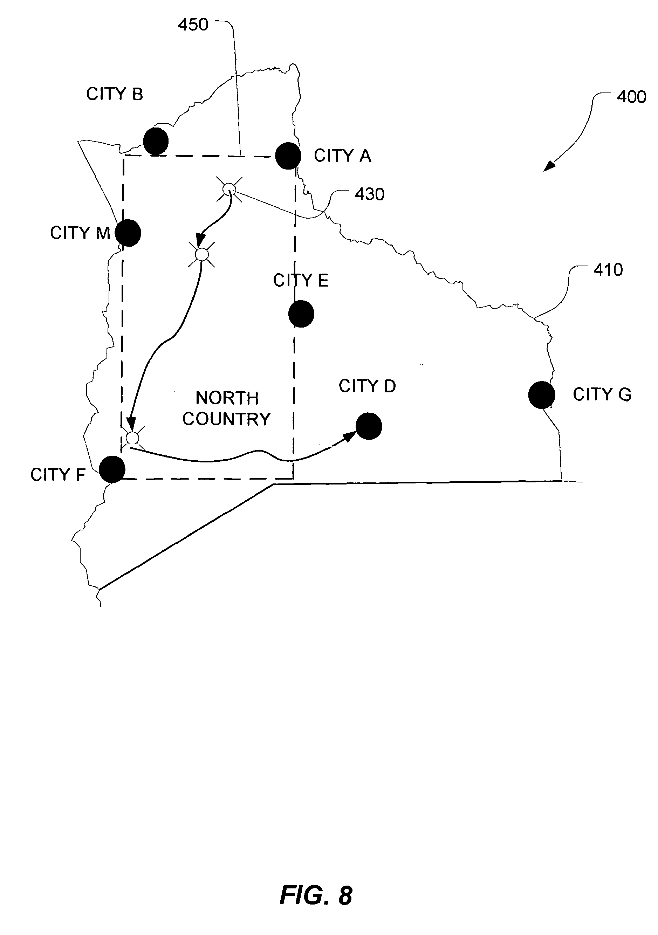

As another example if presented in FIG. 6. In this example, the application specifies a province-type administrative region. In that case, the bounding box 450 is defined to encompass the current location 430 and the largest rectangular box (assuming the bounding region is a rectangular box) that fits within the province in which the device is currently located. In other words, since the device is currently located in the North Province, the bounding box 450 is defined to be the maximum surface area box that can fitted within the boundaries of that province while still enclosing the current location 430 of the device. Once defined, the bounding box 450 is downloaded and cached (or stored) on the device. The device can thus roam within the confines of the bounding box 450 without making any server calls to the reverse geocoding server since all data for that bounding box is cached on the device, as shown in FIG. 7. Only if the device exits the confines of the bounding region (FIG. 8) must the device make a new server call to obtain new data.

In one implementation, the device may request that the reverse geocoder transmit one or more administrative regions back to the device. In main implementations, the server replies with the location description data, bounding region and type of administrative region (which is important if the server responds with multiple regions). With reference to FIG. 5, the server would return, e.g. (<bounding box1>,"North Country", Country). Thus, the server's reply contains the location description data, the bounding region and the type of administrative region (in this case, a country is the administrative region). With reference now to FIG. 6, the server may also return a multiplicity of administrative regions, e.g. (<bounding box1>,"North Country",Country),(<bounding box2>,"North Province", Province) to signal that the administrative region is a province. The administrative regions need not be hierarchical. However, in one specific implementation, the administrative regions may be hierarchical. In one particular implementation of hierarchical administrative regions, the level of resolution may be used to specify the administrative regions that are sought.

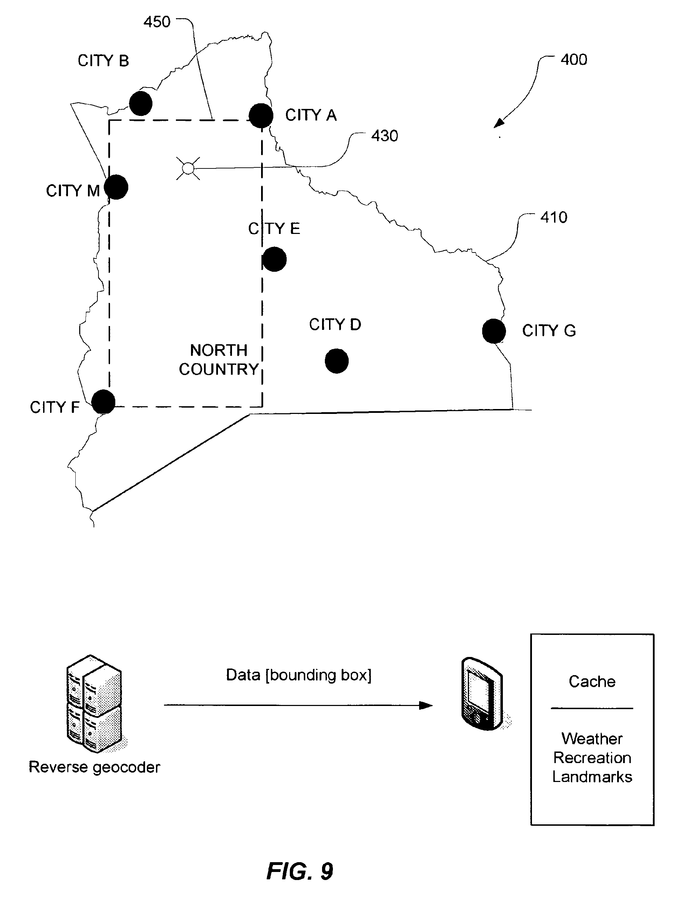

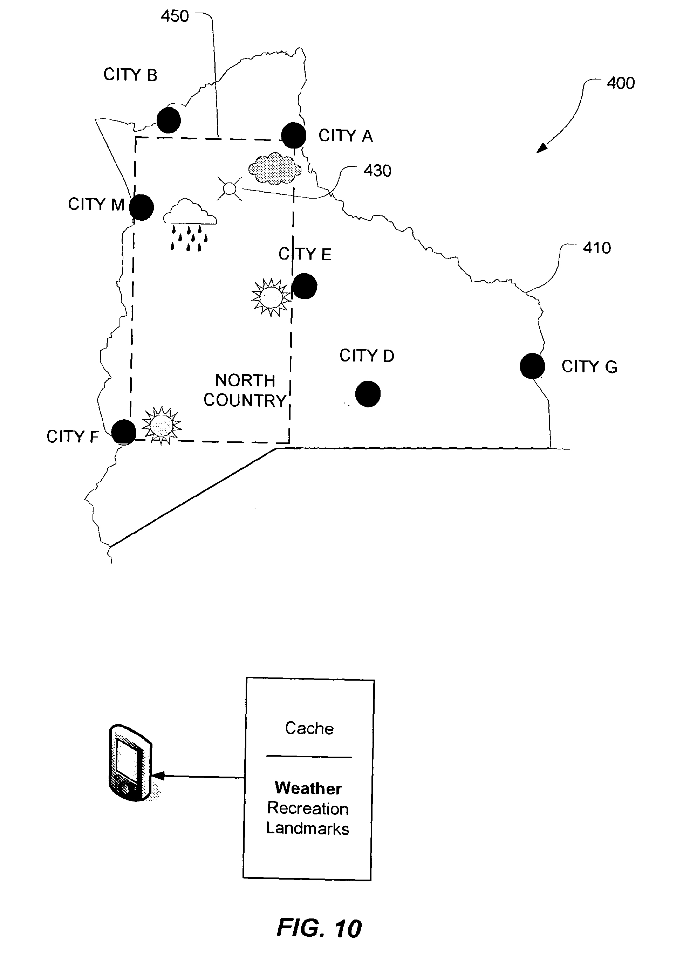

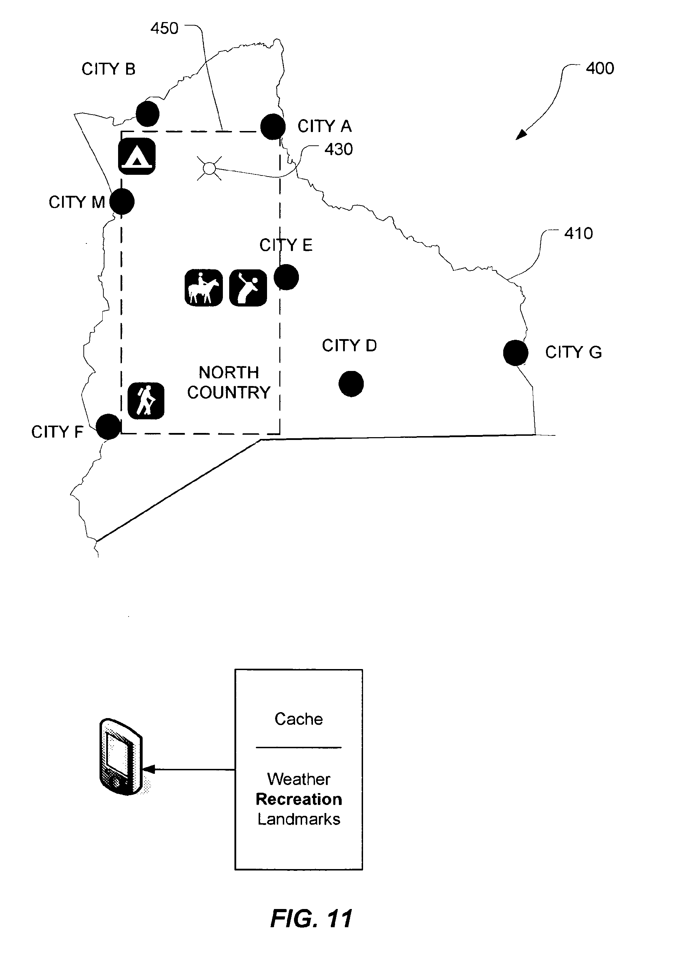

In the specific example presented in FIG. 9, data for a bounding box 450 for three different applications (weather, recreation and landmarks) is cached (or stored) on the device (assuming, for example, that all three applications require a country-level resolution). When the location-based weather service on the device requires weather data, it fetches the weather data from the data cached (or stored) on the device, as shown in FIG. 10. FIG. 11 shows how recreation data is fetched from the data cache. Similarly, FIG. 11 shows how landmark data can be fetched from the data cache (device memory) to provide location-based landmark information to the user. For example, these landmarks may be useful in geotagging photos taken with the device or geotagging other data such as videos, blogs, notes, etc.

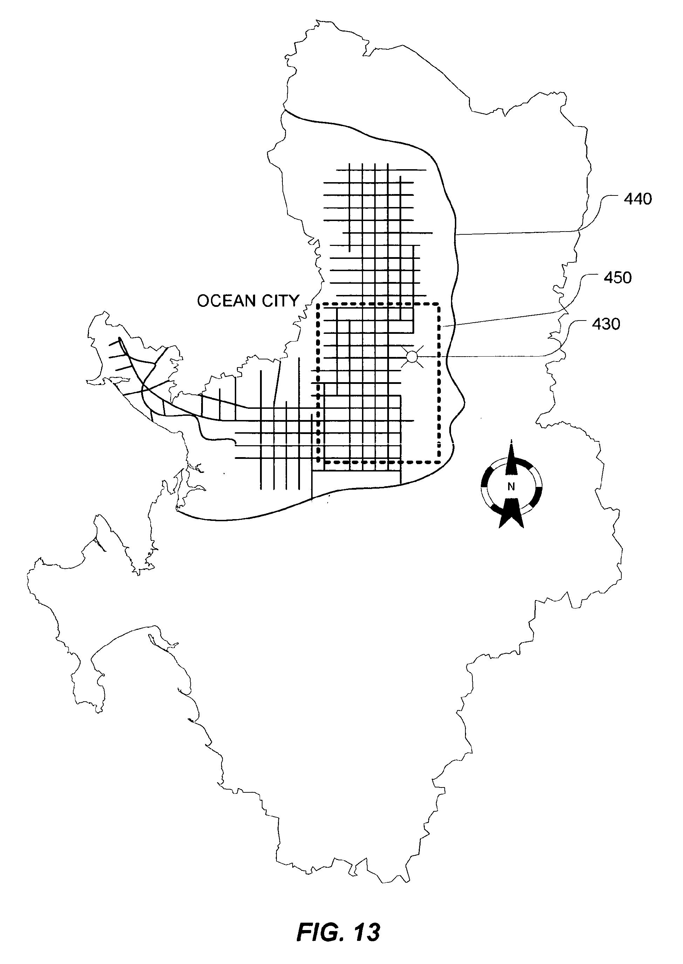

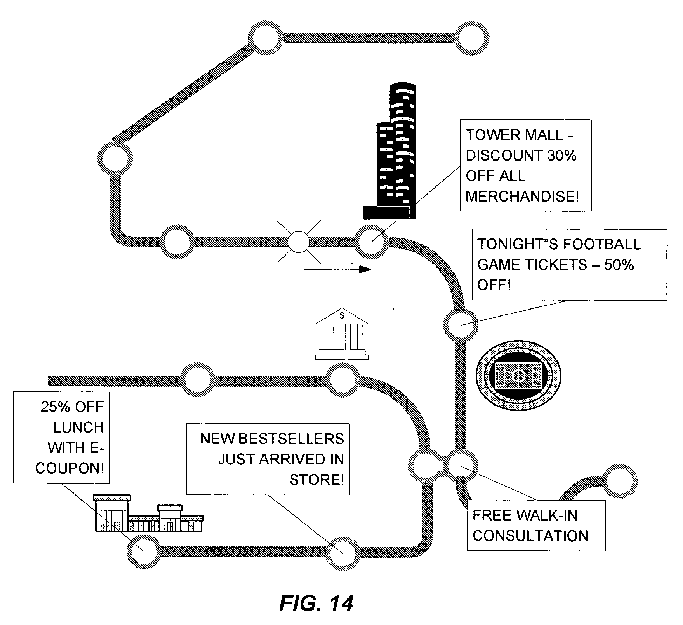

FIG. 13 shows, by way of example, how an application may instead specify a city-level resolution to the reverse geocoder to cause the reverse geocoder to define a bounding box 450 enclosing the current location 430 of the device and that is furthermore confined with the city limits 440 of the city in which the device is currently located. The city-level bounding box 450 is then downloaded and cached on the device. This bounding box 450 may then be used for a variety of applications such as, for example, a location-based shopping service such as the one depicted by way of example in FIG. 14. For example, the device may download and cache shopping-related data for a bounding box within a city. In the particular example presented in FIG. 14, the bounding box contains shopping-related data for a fictitious downtown shopping district. As long as the device remains within the bounding box, the device fetches the location-based shopping data (e.g. deals, special offers, in-store promotions, e-coupons, etc.) directly from the cache without having to make a new server call. Caching the data is especially useful in when operating the device in a subway, underground or in heavily shielded buildings where a wireless signal may be unavailable, intermittent or too weak to reliably transmit data.

In one implementation, the location-based shopping data (or other location description data) may be stored in the cache along with the map data for the same bounding region. However, it is not essential that the corresponding map data be cached to implement this technology. In fact, it is possible that map data is concurrently cached in a different data cache or that map data corresponding to a differently sized or shaped bounding box is cached. Thus, there is not necessarily any concordance between the bounding box for the location description data and any other bounding box that may be used for the underlying map data itself. However, it will be appreciated that for certain applications, such as the one presented in FIG. 14, it is more user-friendly to display the shopping data overlaid on a map, e.g. a street map or public transit map, as shown, in which case it may be useful to also cache the map data for the same bounding box. On the other hand, the application may present the location description without any underlying map at all. Depending on the application, the location-related shopping data or location description data may optionally include its own underlying map data or it may be overlaid on a map generated using a different map application drawn from a dedicated map database in which case the location description data need not have any underlying map data.

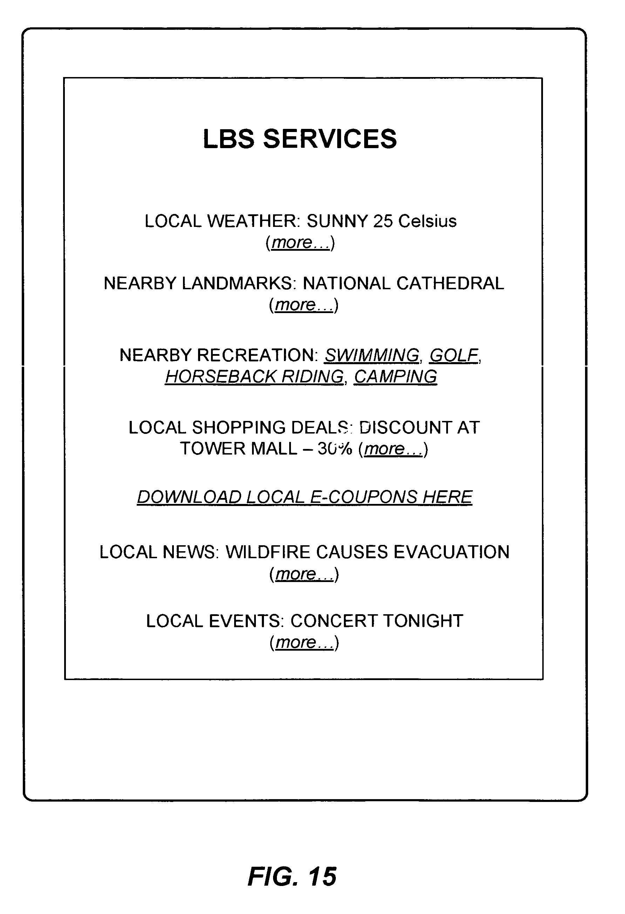

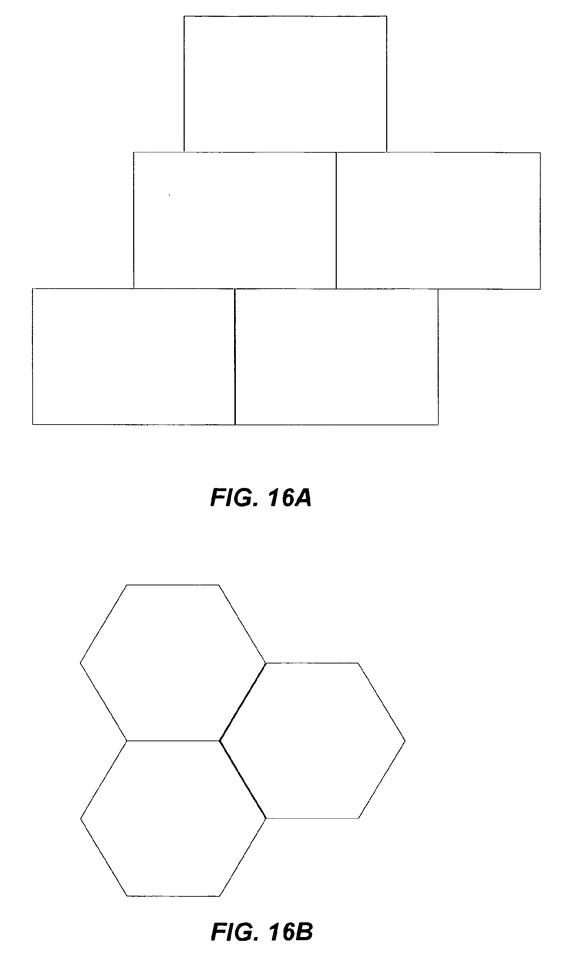

FIG. 15 is a schematic depiction of an example of an LBS services screen on a wireless communications device that displays local information that is stored and fetched from the data cached on the device. This example shows how various location-based services can be presented without any underlying map data. This screen may also provide an options link to an options page (i.e. to a settings menu or preferences menu) to enable a user to select which LBS data to present and/or which to download and cache. This options page may also have settings or preferences to enable the user to specify the size and shape of the bounding region and whether to store data for these bounding regions in the permanent library, whether to purge any cached or permanently stored data (unwanted bounding regions), whether to update any of the cached or permanently stored bounding regions or whether to form composite regions, such as the ones shown in FIG. 16A and 16B. Updating may be done automatically (or manually, i.e. at the user's request).

While the present technology is primarily intended to function with coarse-granularity applications, the technology can still be used for high-resolution applications. In one particular implementation, the application requiring the location description need only specify the level of granularity to the reverse geocoder. The request message to the reverse geocoder may thus use a simple code such as, for example:
0 - street-based
1 - region-based (country level)
2 - region-based (province/state level)
3 - region-based (city level)
4 - region-based (postal code level)

The reverse geocoding server will return the corresponding bounding region that contains the specified latitude/longitude (in the request) and is within the indicated region for region-based reverse geocoding where the level of granularity is equal or greater than 1. The device can maintain in its cache a set of bounding regions for each level of granularity for subsequent on-device lookup. As noted above, however, this is merely a specific implementation of the more general notion of using administrative regions to specify which area to reverse geocode. In other words, the region that is required by the application may, in general, be defined using an administrative region, which may be a set of non-hierarchical, overlapping regions. Once the server receives an indication of which one or more administrative regions are desired, the bounding region for each is created to fit within each respective administrative region in question. Each bounding region for each of the one or more administrative regions is then returned to the device.

The bounding regions cached on the device may be purged after a predetermined time has elapsed (i.e. a time-based lifespan), if they are not used within a certain amount of time (i.e. a frequency-based lifespan), if the server has associated an expiry time with the region (i.e. a timestamp-based lifespan), if a newer version of the bounding region is detected (i.e. a version-based lifespan), or once the application is closed (i.e. a session-based lifespan). However, it is also possible to persist the bounding regions on the device for as long as desired, e.g. based on a user preference or setting, or only when manually purged by the user.

The bounding region, as noted above, may be a bounding box, a bounding polygon, or any other arbitrary shape. However, the rectangular box is believed to be the most efficient shape.

In addition, these bounding regions may be united to form a composite bounding region. As one example, FIG. 16A is a schematic depiction of a composite bounding region composed of multiple bounding boxes. As another example, FIG. 16B is a schematic depiction of a composite bounding region composed of multiple hexagonal bounding regions. It should be appreciated that a composite bounding region may also be a hybrid composite bounding box formed by uniting one bounding region of a first shape with a second bounding region of a second shape different from the first shape.

In another implementation of this technology, the server (reverse geocoder) may transmit a plurality of administrative regions back to the device. These administrative regions may or may not be hierarchical. In other words, the resulting bounding regions for each of the requested administrative regions may overlap without one being properly contained within another. For example, a company may wish to reverse geocode sales regions as well as provinces.

This new technology has been described in terms of specific implementations and configurations which are intended to be exemplary only. The scope of the exclusive right sought by the Applicant is therefore intended to be limited solely by the appended claims.

## Claims

1. A method for reverse geocoding location information obtained by a wireless communications device, the method comprising:
determining (300) the location information for a location;
determining a level of granularity or a type of administrative region required by an application on the device;
communicating (310) a request containing the location information and the level of granularity or the type of administrative region to a reverse geocoding server that defines a bounding region of a predetermined shape based on the level of granularity or the administrative region and reverse-geocodes the location information to generate location description data for the bounding region that geographically surrounds the location wherein the bounding region is defined to contain the location and to maximally fit inside boundaries of a predetermined geographical entity that is determined by either the type of administrative region or the level of granularity;
receiving (320) the location description data from the reverse geocoding server for the bounding region; and
storing (330) the location description data for the bounding region in a memory on the device.

2. The method as claimed in claim 1 further comprising:
determining new location information for a new location;
where the new location lies inside the bounding region, obtaining the location description data for the new location from the memory on the device; and
where the new location lies outside the bounding region, communicating the new location information to the reverse geocoding server.

3. The method as claimed in claim 2 further comprising storing the location description data for each bounding region in a persistent storage on the device to thereby create a library of bounding regions.

4. The method as claimed in any preceding claim further comprising uniting a plurality of bounding regions stored on the device to form a composite bounding region.

5. The method as claimed in claim 4 wherein the request comprises a code specifying one or both of the administrative region and the level of granularity required by the application to enable the reverse geocoding server to determine which one of a plurality of predetermined geographical entities to use for defining the bounding region.

6. The method as claimed in claim 4 or claim 5 wherein communicating the location information to the reverse geocoding server comprises specifying a plurality of administrative regions to enable the server to define a plurality of bounding regions for each one of the administrative regions.

7. The method as claimed in any preceding claim wherein receiving the location description data comprises also receiving the bounding region and type of administrative region for one or more administrative regions.

8. A computer readable medium comprising code which when loaded into memory and executed on a processor of a wireless communications device is adapted to:
determine (300) the location information for a location;
determine a level of granularity or a type of administrative region required by an application on the device;
communicate (310) a request containing the location information and the level of granularity or the administrative region to a reverse geocoding server that reverse-geocodes the location information to generate location description data for a bounding region that geographically surrounds the location wherein the bounding region is a predetermined shape defined to contain the location and to maximally fit inside boundaries of a predetermined geographical entity that is determined by either the type of administrative region or the level of granularity;
receive (320) the location description data from the reverse geocoding server for the bounding region containing the location; and
cache (330) the location description data for the bounding region in a memory cache on the device.

9. A wireless communications device comprising:
a processor (110) operatively coupled to a memory (120) for executing an application on the device, the application requesting a location description for a location and specifying either a level of granularity or a type of administrative region;
a position-determining subsystem (190) for determining location information for the location; and
a radiofrequency transceiver (170) for communicating a request containing the location information and either the type of administrative region or the level of granularity to a reverse geocoding server to enable reverse-geocoding of the location information to generate location description data for a bounding region that geographically surrounds the location wherein the bounding region is a predetermined shaped defined to contain the location and to maximally fit inside boundaries of a predetermined geographical entity that is determined by either the type of administrative region or the level of granularity;
wherein the transceiver is configured to receive the location description data and to provide the location description data to the memory for caching of the location description data on the device.

10. The device as claimed in claim 9 wherein the processor is configured to:
receive a request for new location information from the application;
determine if a new location is inside or outside the bounding region;
obtain the location description data for the new location from the cache on the device if the new location lies inside the bounding region; and
communicate new location information to the reverse geocoding server if the new location lies outside the bounding region.

11. The device as claimed in claim 9 or claim 10 wherein the bounding region is defined to contain the location and to fit within boundaries of one of a plurality of predetermined geographical entities.

12. The device as claimed in claim 11 wherein the predetermined geographical entities are selected from the group consisting of districts, cities, counties, states/provinces, countries, continents, telephone area code areas, postal code areas, electoral areas.

13. The device as claimed in any of claims 9 to 12 wherein the radiofrequency transceiver communicates location information and one or more administrative regions to the reverse geocoding server to enable the server to define bounding regions for each of the one or more administrative regions specified by the device.

14. The device as claimed in any of claims 9 to 13 wherein the processor is configured to create a composite bounding region by uniting a plurality of bounding regions.

## Patentansprüche

1. Verfahren zum umgekehrten (reverse) Geocodieren von Positionsinformation, die durch eine drahtlose Kommunikationsvorrichtung erlangt wird, wobei das Verfahren aufweist:
Bestimmen (300) der Positionsinformation für eine Position;
Bestimmen eines Grads einer Detailgenauigkeit oder eines Typs eines administrativen Gebiets, die von einer Anwendung auf der Vorrichtung erforderlich sind;
Kommunizieren (310) einer Anforderung, die die Positionsinformation und den Grad einer Detailgenauigkeit oder den Typ eines administrativen Gebiets enthält, an einen Umkehr-Geocodier-Server, der ein begrenztes Gebiet mit einer vorgegebenen Form definiert basierend auf dem Grad einer Detailgenauigkeit oder dem administrativen Gebiet und die Positionsinformation umgekehrt-geocodiert, um
Positionsbeschreibungsdaten für das begrenzte Gebiet zu erzeugen, das geographisch die Position umgibt, wobei das begrenzte Gebiet definiert ist als die Position enthaltend und maximal innerhalb der Grenzen einer vorgegebenen geographischen Entität passend, die entweder durch den Typ eines administrativen Gebiets oder den Grad einer Detailgenauigkeit bestimmt wird;
Empfangen (320) der Positionsbeschreibungsdaten von dem Umkehr-Geocodier-Server für das begrenzte Gebiet; und
Speichern (330) der Positionsbeschreibungsdaten für das begrenzte Gebiet in einem Speicher auf der Vorrichtung.

2. Verfahren gemäß Anspruch 1, das weiter aufweist:
Bestimmen neuer Positionsinformation für eine neue Position;
wenn die neue Position innerhalb des begrenzten Gebiets liegt, Erlangen der Positionsbeschreibungsdaten für die neue Position aus dem Speicher der Vorrichtung; und
wenn die neue Position außerhalb des begrenzten Gebiets liegt,
Kommunizieren der neuen Positionsinformation an den Umkehr-Geocodier-Server.

3. Verfahren gemäß Anspruch 2, das weiter aufweist Speichern der Positionsbeschreibungsdaten für jedes begrenzte Gebiet in einem persistenten Speicher auf der Vorrichtung, um somit eine Bibliothek von begrenzten Gebieten zu erzeugen.

4. Verfahren gemäß einem vorhergehenden Anspruch, das weiter aufweist Zusammenfassen einer Vielzahl von begrenzten Gebieten, die auf der Vorrichtung gespeichert sind, um ein zusammengesetztes begrenztes Gebiet zu bilden.

5. Verfahren gemäß Anspruch 4, wobei die Anforderung einen Code aufweist, der eines oder beide des administrativen Gebiets und des Grads einer Detailgenauigkeit spezifiziert, die von der Anwendung erforderlich sind, um dem Umkehr-Geocodier-Server eine Bestimmung zu ermöglichen, welche einer Vielzahl von vorgegebenen geographischen Entitäten zum Definieren des begrenzten Gebiets zu verwenden ist.

6. Verfahren gemäß Anspruch 4 oder Anspruch 5, wobei ein Kommunizieren der Positionsinformation an den Umkehr-Geocodier-Server ein Spezifizieren einer Vielzahl von administrativen Gebieten aufweist, um dem Server zu ermöglichen, eine Vielzahl von begrenzten Gebieten für jedes der administrativen Gebiete zu definieren.

7. Verfahren gemäß einem vorhergehenden Anspruch, wobei das Empfangen der Positionsbeschreibungsdaten auch ein Empfangen des begrenzten Gebiets und eines Typs eines administrativen Gebiets für ein oder mehrere administrative Gebiete aufweist.

8. Computerlesbares Medium, das Code aufweist, der bei einem Laden in einen Speicher und einer Ausführung auf einem Prozessor einer drahtlosen Kommunikationsvorrichtung ausgebildet ist zum:
Bestimmen (300) der Positionsinformation für eine Position;
Bestimmen eines Grads einer Detailgenauigkeit oder eines Typs eines administrativen Gebiets, die von einer Anwendung auf der Vorrichtung erforderlich sind;
Kommunizieren (310) einer Anforderung, die die Positionsinformation und den Grad einer Detailgenauigkeit oder das administrative Gebiets enthält,
an einen Umkehr-Geocodier-Server, der die Positionsinformation umgekehrt-geocodiert, um Positionsbeschreibungsdaten für ein begrenztes Gebiet zu erzeugen, das geographisch die Position umgibt, wobei das begrenzte Gebiet eine vorgegebene Form hat, die definiert ist als die Position enthaltend und maximal innerhalb der Grenzen einer vorgegebenen geographischen Entität passend, die entweder durch den Typ eines administrativen Gebiets oder den Grad einer Detailgenauigkeit bestimmt wird;
Empfangen (320) der Positionsbeschreibungsdaten von dem Umkehr-Geocodier-Server für das begrenzte Gebiet, das die Position enthält; und
Speichern (330) der Positionsbeschreibungsdaten für das begrenzte Gebiet in einem Cachespeicher auf der Vorrichtung.

9. Drahtlose Kommunikationsvorrichtung, die aufweist:
einen Prozessor (110), der betriebsfähig mit einem Speicher (120) verbunden ist, zum Ausführen einer Anwendung auf der Vorrichtung, wobei die Anwendung eine Positionsbeschreibung für eine Position anfordert und entweder einen Grad einer Detailgenauigkeit oder einen Typ eines administrativen Gebiets spezifiziert;
ein Positionsbestimmungsteilsystem (190) zum Bestimmen von Positionsinformation für die Position; und
einen Funkfrequenz-Transceiver (170) zum Kommunizieren einer Anforderung, die die Positionsinformation und entweder den Typ eines administrativen Gebiets oder den Grad einer Detailgenauigkeit enthält, an einen Umkehr-Geocodier-Server, um ein umgekehrtes Geocodieren der Positionsinformation zu ermöglichen, um Positionsbeschreibungsdaten für ein begrenztes Gebiet zu erzeugen, das geographisch die Position umgibt,
wobei das begrenzte Gebiet eine vorgegebene Form hat, die definiert ist als die Position enthaltend und maximal innerhalb der Grenzen einer vorgegebenen geographischen Entität passend, die entweder durch den Typ eines administrativen Gebiets oder den Grad einer Detailgenauigkeit bestimmt wird;
wobei der Transceiver konfiguriert ist zum Empfangen der Positionsbeschreibungsdaten und zum Liefern der Positionsbeschreibungsdaten an den Speicher zum Speichern der Positionsbeschreibungsdaten auf der Vorrichtung.

10. Vorrichtung gemäß Anspruch 9, wobei der Prozessor konfiguriert ist zum:
Empfangen einer Anforderung für neue Positionsinformation von der Anwendung;
Bestimmen, ob eine neue Position innerhalb oder außerhalb des begrenzten Gebiets ist;
Erlangen der Positionsbeschreibungsdaten für die neue Position aus dem Speicher der Vorrichtung, wenn die neue Position innerhalb des begrenzten Gebiets liegt; und
Kommunizieren der neuen Positionsinformation an den Umkehr-Geocodier-Server, wenn die neue Position außerhalb des begrenzten Gebiets liegt.

11. Vorrichtung gemäß Anspruch 9 oder Anspruch 10, wobei der begrenzte Bereich definiert ist als die Position enthaltend und in Grenzen einer aus einer Vielzahl von vorgegebenen geographischen Entitäten passend.

12. Vorrichtung gemäß Anspruch 11, wobei die vorgegebenen geographischen Entitäten aus der Gruppe ausgewählt sind, die besteht aus Bezirken, Städten, Landkreisen, Bundesländern/Provinzen, Ländern, Kontinenten, Telefonvorwahlgebieten, Postleitzahlengebieten, Wahlkreisen.

13. Vorrichtung gemäß einem der Ansprüche 9 bis 12, wobei der Funkfrequenz-Transceiver Positionsinformation und ein oder mehrere administrative Gebiete an den Umkehr-Geocodier-Server kommuniziert, um dem Server zu ermöglichen, begrenzte Gebiete für jedes des einen oder mehrerer administrativer Gebiete zu definieren, spezifiziert durch die Vorrichtung.

14. Vorrichtung gemäß einem der Ansprüche 9 bis 13, wobei der Prozessor konfiguriert ist zum Erzeugen eines zusammengesetzten begrenzten Gebiets durch Zusammenfassen einer Vielzahl von begrenzten Gebieten.

## Revendications

1. Procédé de géocodage inverse d'informations d'emplacement obtenues par un dispositif de communications sans fil, le procédé comprenant le fait :
de déterminer (300) les informations d'emplacement pour un emplacement ;
de déterminer un niveau de granularité ou un type de région administrative requis par une application sur le dispositif ;
de communiquer (310) une demande contenant les informations d'emplacement et le niveau de granularité ou le type de région administrative à un serveur de géocodage inverse qui définit une région de délimitation d'une forme prédéterminée sur la base du niveau de granularité ou de la région administrative et exécute un géocodage inverse des informations d'emplacement afin de générer des données de description d'emplacement pour la région de délimitation qui entoure géographiquement l'emplacement, où la région de délimitation est définie de sorte à contenir l'emplacement et s'insérer au maximum à l'intérieur des limites d'une entité géographique prédéterminée qui est déterminée soit par le type de région administrative soit par le niveau de granularité ;
de recevoir (320) les données de description d'emplacement du serveur de géocodage inverse pour la région de délimitation ; et
de stocker (330) les données de description d'emplacement pour la région de délimitation dans une mémoire sur le dispositif.

2. Procédé tel que revendiqué dans la revendication 1, comprenant en outre le fait :
de déterminer des informations d'un nouvel emplacement pour un nouvel emplacement ;
lorsque le nouvel emplacement se situe à l'intérieur de la région de délimitation,
d'obtenir les données de description d'emplacement pour le nouvel emplacement à partir de la mémoire sur le dispositif ; et
lorsque le nouvel emplacement se situe à l'extérieur de la région de délimitation,
de communiquer les informations du nouvel emplacement au serveur de géocodage inverse.

3. Procédé tel que revendiqué dans la revendication 2, comprenant en outre le fait de stocker les données de description d'emplacement pour chaque région de délimitation dans un stockage persistant sur le dispositif pour créer ainsi une bibliothèque de régions de délimitation.

4. Procédé tel que revendiqué dans l'une des revendications précédentes, comprenant en outre le fait d'unir une pluralité de régions de délimitation stockées sur le dispositif pour former une région de délimitation composite.

5. Procédé tel que revendiqué dans la revendication 4, dans lequel la demande comprend un code spécifiant l'un de la région administrative et du niveau de granularité requis par l'application, ou les deux, afin de permettre au serveur de géocodage inverse de déterminer quelle entité parmi la pluralité d'entités géographiques prédéterminées doit être utilisée pour définir la région de délimitation.

6. Procédé tel que revendiqué dans la revendication 4 ou 5, dans lequel la communication des informations d'emplacement au serveur de géocodage inverse comprend le fait de spécifier une pluralité de régions administratives afin de permettre au serveur de définir une pluralité de régions de délimitation pour chacune des régions administratives.

7. Procédé tel que revendiqué dans l'une des revendications précédentes, dans lequel la réception des données de description d'emplacement comprend également le fait de recevoir la région de délimitation et le type de région administrative pour une ou plusieurs régions administratives.

8. Support lisible par ordinateur comprenant un code qui, lorsqu'il est chargé en mémoire et exécuté sur un processeur d'un dispositif de communications sans fil, est conçu pour:
déterminer (300) les informations d'emplacement pour un emplacement ;
déterminer un niveau de granularité ou un type de région administrative requis par une application sur le dispositif ;
communiquer (310) une demande contenant les informations d'emplacement et le niveau de granularité ou la région administrative à un serveur de géocodage inverse qui exécute un géocodage inverse des informations d'emplacement afin de générer des données de description d'emplacement pour une région de délimitation qui entoure géographiquement l'emplacement, où la région de délimitation est une forme prédéterminée définie de sorte à contenir l'emplacement et s'insérer au maximum à l'intérieur des limites d'une entité géographique prédéterminée qui est déterminée soit par le type de région administrative soit par le niveau de granularité ;
recevoir (320) les données de description d'emplacement du serveur de géocodage inverse pour la région de délimitation contenant l'emplacement ; et
mettre en mémoire cache (330) les données de description d'emplacement pour la région de délimitation dans une mémoire cache sur le dispositif.

9. Dispositif de communications sans fil comprenant :
un processeur (110) couplé de manière fonctionnelle à une mémoire (120) pour exécuter une application sur le dispositif, l'application demandant une description d'emplacement pour un emplacement et spécifiant soit un niveau de granularité soit un type de région administrative ;
un sous-système (190) de détermination de position pour déterminer des informations d'emplacement pour l'emplacement ; et
un émetteur-récepteur (170) de radiofréquence pour communiquer une demande contenant les informations d'emplacement et soit le type de région administrative soit le niveau de granularité à un serveur de géocodage inverse pour permettre le géocodage inverse des informations d'emplacement afin de générer des données de description d'emplacement pour une région de délimitation qui entoure géographiquement l'emplacement, où la région de délimitation a une forme prédéterminée définie de sorte à contenir l'emplacement et s'adapter au maximum à l'intérieur des limites d'une entité géographique prédéterminée qui est déterminée soit par le type de région administrative soit par le niveau de granularité ;
dans lequel l'émetteur-récepteur est configuré pour recevoir les données de description d'emplacement et fournir les données de description d'emplacement à la mémoire pour mettre en mémoire cache les données de description d'emplacement sur le dispositif.

10. Dispositif tel que revendiqué dans la revendication 9, dans lequel le processeur est configuré pour:
recevoir, de l'application, une demande pour des informations de nouvel emplacement ;
déterminer si un nouvel emplacement se trouve à l'intérieur ou à l'extérieur de la région de délimitation ;
obtenir les données de description d'emplacement pour le nouvel emplacement à partir de la mémoire cache sur le dispositif si le nouvel emplacement se situe à l'intérieur de la région de délimitation ; et
communiquer des informations de nouvel emplacement au serveur de géocodage inverse si le nouvel emplacement se situe à l'extérieur de la région de délimitation.

11. Dispositif tel que revendiqué dans la revendication 9 ou la revendication 10, dans lequel la région de délimitation est définie de sorte à contenir l'emplacement et à s'insérer dans les limites de l'une d'une pluralité d'entités géographiques prédéterminées.

12. Dispositif tel que revendiqué dans la revendication 11, dans lequel les entités géographiques prédéterminées sont choisies parmi le groupe constitué de quartiers, villes, comtés, états/provinces, pays, continents, zones à indicatifs téléphoniques régionaux, zones à code postal, zones électorales.

13. Dispositif tel que revendiqué dans l'une des revendications 9 à 12, dans lequel l'émetteur-récepteur de radiofréquence communique des informations d'emplacement et une ou plusieurs régions administratives au serveur de géocodage inverse pour permettre au serveur de définir des régions de délimitation pour chacune de l'une ou plusieurs régions administratives spécifiées par le dispositif.

14. Dispositif tel que revendiqué dans l'une des revendications 9 à 13, dans lequel le processeur est configuré pour créer une région de délimitation composite en unissant une pluralité de régions de délimitation.
